Europäisches Patentamt

European Patent Office

Office européen des brevets

(19)

(11) Veröffentlichungsnummer: **0 229 393**
**B1**

(12) **EUROPÄISCHE PATENTSCHRIFT**

(45) Veröffentlichungstag der Patentschrift: **24.10.90**

(21) Anmeldenummer: **86118087.5**

(22) Anmeldetag: **28.12.86**

(51) Int. Cl.⁵: **C 08 F 2/32, C 08 J 3/02**

(54) Wasser-in-Öl-Emulsion.

(30) Priorität: **30.12.85 DE 3546308**

(43) Veröffentlichungstag der Anmeldung:
**22.07.87 Patentblatt 87/30**

(45) Bekanntmachung des Hinweises auf die
Patenterteilung:
**24.10.90 Patentblatt 90/43**

(84) Benannte Vertragsstaaten:
**AT BE CH DE ES FR GB GR IT LI LU NL SE**

(56) Entgegenhaltungen:
**FR-A-2 254 583**

(73) Patentinhaber: **SANDOZ AG**
**Lichtstrasse 35**
**CH-4002 Basel (CH)**
(84) **BE CH ES FR GB**

(73) Patentinhaber: **SANDOZ-PATENT-GMBH**
**Humboldtstrasse 3**
**D-7850 Lörrach (DE)**
(84) **DE**

(73) Patentinhaber: **SANDOZ-ERFINDUNGEN**
**Verwaltungsgesellschaft m.b.H.**
**Brunner Strasse 59**
**A-1235 Wien (AT)**
(84) **AT**

(72) Erfinder: **Breuninger, Hartmut**
**Hessenring 29**
**D-6525 Westhofen (DE)**

Courier Press, Leamington Spa, England.

EP 0 229 393 B1

**Beschreibung**

Die vorliegende Erfindung betrifft eine Wasser in Öl (W/O) Emulsion, die eine mit Wasser nicht mischbare Flüssigkeit (äußere Phase); wasserlösliche Monomere und/oder Polymere und Wasser (innere Phase) sowie eine Emulgatorkombination enthält, und die vorzugsweise als Flockungs- und/oder Verdickungshilfsmittel Verwendung finden soll.

Es sind z.B. aus der DE—C—2154081 sowie der US—A—3282874 polymerhaltige Stoffe sowie Verfahren zum Auflösen dieser Stoffe mit Wasser bekannt, die Verdickungs- und/oder Flockungseigenschaften ergeben. Dabei ist beim Stand der Technik nach der DE—C- ein Zusatz eines hydrophilen Netzmittels erforderlich um eine rasche Auflösung der Polymerteilchen in der kontinuierlichen Wasserphase zu erreichen.

Nach der US—A— werden die polymerhaltigen Stoffe zu Gelen umgeformt und diese unter starken Rühren und Wasserzugabe zu einer verdünnten Polymerlösung verarbeitet.

Aufgabe der vorliegenden Erfindung ist es eine W/O Emulsion zu schaffen, die direkt und ohne zusätzliche Maßnahmen wie Netzmittelzusätze oder starkes Rühren, schnell in eine O/W-Emulsion umwandelbar ist.

Diese Aufgabe wird durch die in Anspruch 1 angegebene Emulgatorkombination gelöst.

Werden wasserlösliche Monomere/Polymere in wässriger Phase mit der erfindungsgemäßen Emulgatorkombination in hydrophober, nicht mit Wasser mischbarer Phase, emulgiert, so kann nach beendeter Polymerisation die Emulsion ohne Zusatz irgend einer weiteren Komponente während oder nach der Reaktion durch Zugabe von Wasser und mit Hilfe mäßiger Scherung, schnell invertiert werden. Damit werden die hergestellten wasserlöslichen Polymere in wässriger Verdünnung sofort verwendungsfähig. Die mit dem erfindungsgemäßen Emulsionssystem hergestellten W/O-Emulsionen zeichnen sich durch eine große Absetzstabilität aus. Auch nach 6 Monaten ist keine Phasentrennung zu erkennen.

Der HLB-Wert der Emulsion kann durch Beimischung eines oder mehrerer Emulgatoren, die ebenfalls eine Carboxylgruppe aufweisen und/oder neutral sind, variiert werden. Bevorzugt ist der HLB-Wert der Emulsion <8>4. Besonders günstig ist ein HLB-Wert zwischen 7 und 7,5.

Als neutrale Emulgatoren kommen z.B. in Betracht

Mono- oder Polyoxäthylierungs- und/oder Oxypropylierungsprodukte von gesättigten und/oder ungesättigten, linearen und/oder verzweigten aliphatischen Alkoholen, von Alkylphenolen, von Fettsäuren, von Fettsäurealkanolamiden, von Fettsäurepolyolpartialestern und von vegetabilen oder tierischen Fetten oder Oelen; bzw. entsprechende Verätherungs; und/oder Veresterungsprodukte von Mono- und/oder Polyäthylen- und/oder -propylenglykolen.

Fettsäurepolyolpartialester

Als Carboxyl gruppenhaltige Emulgatoren sind neben den Alkylpolyglykoläthercarbonsäuren auch Alkylphenolpolyglykoläthercarbonsäuren verwendbar. Weiterhin können auch die Salze mehrwertiger, bevorzugt 2-wertiger Kationen an Stelle der freien Emulgatorcarbonsäuren eingesetzt werden, wenn der pH-Wert der wässrigen (inneren) Phase der Emulsion <4> ist.

Die erfindungsgemäße Emulsion ist ferner dadurch gekennzeichnet, daß die gesamte Emulgatorkonzentration, gerechnet auf die Säureform bei den Carboxylemulgatoren zwischen 5 und 25 Gewichts%, bevorzugt bei 10 Gewichts%, der hydrophoben, nicht mit Wasser mischbaren (äußeren) Phase, liegt. Die Emulgatoren werden bevorzugt, im Falle der Carboxylemulgatoren in ihrer Säureform, der hydrophoben Phase zugesetzt.

Als hydrophobe Phase kommen z.B. folgende Öle in Betracht:
Kohlenwasserstoffe

Kohlenwasserstoffe aus der Erdölverarbeitung, vornehmlich Spezialbenzine, die aus dem Rohbenzin herausdestilliert werden (Siedebereich 65—140°C) (desaromatisierte, sowie aromatenhaltige Typen) White Spirits, Testbenzine und Lackbenzine, (Siedebereich 100—310°C,—vorzugsweise 140—300°C), insbesondere:

| | | |
|---|---|---|
| . aromatenfreien Typen | Siedebereich | 100—270°C |
| | | vorzugsweise 140—250°C |
| . Fraktionen mit einem Aromatengehalt zwischen 12 und 19% | Siedebereich | 160—210°C |
| . Frationen mit einem Aromatengehlat zwischen 24 und 45% | Siedebereich | 140—310°C |
| . Fraktionen mit einem Aromatengehalt von 80—90% | Siedebereich | 160—260°C |
| . rein aromatische white spirits | Siedebereich | 160—310°C |

2

EP 0 229 393 B1

Aromatenfreie Kohlenwasserstoffe mit isoparaffinischer Struktur (Siedebereich (110—260°C)
Paraffinöle (=Mineralöle) z.B. Dieselöle, Spindelöle, Maschinenöle, Zylinderöle, Schmieröle und Vaselinöle
Petrolatum (Petrolate)
Synthese-Kohlenwasserstoffe, vornehmlich solche, aus der Fischer-Tropsch-Synthese oder der Hochdruckkohlenhydrierung, insbesondere:

| —synthetische Benzine | Siedebereich | 65—170°C |
| —Kogasin I | Siedebereich | 190—230°C |
| —Kogasin II | Siedebereich | 230—330°C |
| —synthetisches Paraffinöl | Siedebereich | 300—450°C |

Gegebenenfalls alkylsubstituierte Benzole, Benzol, Xylol, Toluol, Methyläthyl- und Trimethylbenzole, Dimethyläthyl- und Tetramethylbenzole, sowie höhere Alkylbenzole ($C_6$–$C_{12}$-Alkylbenzole).

Näturliche vegetabile oder tierische Triglyceride, insbesondere Olivenöl. Erdnußöl, Cottonöl, Kokosfett, Rüböl, Sonnenblumenöl, Maiskeimöl, Rizinusöl und Klauenöl.

Fettsäure-monoester, vornehmlich $C_{1-4}$-Alkylester von $C_{12-24}$-, vorzugsweise $C_{14-24}$-Fettsäure, insbesondere: Methyl-, Butyl- und Isopropylester von Stearinsäure, Oelsäure, Palmitinsäure und Myristinsäure und deren Mischungen.

Bevorzugt kommen die White Spirits-Öle in Betracht. Die wässrige, zu emulgierende (innere) Phase ist in ihrer Zusammensetzung dadurch gekennzeichnet, daß sie einen pH-Wert <4>2, bevorzugt 3 bis 3,5 aufweist. Bei diesem pH-Wert stören auch säure Funktionen nicht, sofern sie wasserlöslich und nicht in der hydrophoben (äußeren) Phase löslich sind.

Von besonderem Vorteil bei der W/O Emulsion nach der Erfindung ist, daß während und nach der Polymerisation kein Tensid oder eine andere Komponente (Netzmittel) zugesetzt werden muß, um nach Beendigung der Polymerisation eine schnelle Invertierung der W/O in eine O/W Emulsion allein durch Wasserzugabe und mäßige Scherung, zu erreichen.

Bevorzugt wird die erfindungsgemäße W/O Emulsion als Flockungs- und/oder Verdickungshilfsmittel verwendet.

Nachstehend sind zwei Beispiele betreffend die erfindungsgemäße W/O Emulsion aufgeführt:

Beispiel 1
a) Emulgatorkombination:

| 50 Teile Oleyldiglycoläthercarbonsäure | HLB 5,9 |
| 25 Teile Oleylnonaglycoläthercarbonsäure | HLB 12,9 |
| 25 Teile Sorbitansesquioleat | HLB 3,7 |

b) Äußere Phase:
1100 Teile Weißöl

c) Innere Phase:
2325 Teile Wasser von 19° dH
1400 Teile Polyacrylamid
29 Teile Dimethylformamid
25 Teile Magnesiumchlorid-Hexahydrat
ca. 3 Teile Mineralsäure (pH d.Lösung vor Polymerisation=3,5)
0,05 Teile Äthylendinitrilotetraessigsäure-Dinatriumsalz-Dihydrat Reste d. Starters Azoisobutyronitril
Die Emulsion zeigt nach der Polymerisation eine Brookfield-Viskosität von $\eta$=530 m Pas (gemessen mit Spindel 2 bei 30 Upm).

Nach 3 Min. zeigt eine 1%ige Produktlösung in Wasser von 19° dH eine Brookfield-Viskosität von 25 m Pas, gemessen mit Spindel 2, 30 Upm.

Beispiel 2
a) Emulgatorkombination

| 30 Teile Oleyldiglycoläthercarbonsäure | HLB 5,9 |
| 9,23 Teile Oleylnonaglycoläthercarbonsäure | HLB 12,9 |
| 6,92 Teile Sorbitanmonooleat | HLB 4,3 |

b) Äußere Phase:
531 Teile Weißöl

c) Innere Phase:
985,9 Teile Acrylamid/Dimethylaminoäthylmethacrylat-Salz-Copolymerisat mit 26,6 Mol% kationischer Ladung
715 Teile destilliertes Wasser

3

20,8 Teile Dimethylformamid

ca. 5 Teile Mineralsäure (pH der Lösung vor der Polymerisation 3,1)

0,03 Teile Äthylendinitrilotetraessigsäure-Dinatriumsalz-Dihydrat       Reste     des     Starters
          Azobisisobutyronitril

Nach der Polymerisation beträgt die Brookfield-Viskosität der Emulsion η=610 m Pas, gemessen mit Spindel 2, 30 Upm.

Die 1% Produktlösung in Wasser von 19° dH, zeigt bei 30 Upm mit Spindel 3, nach 3 Min. eine Brookfieldviskosität von η=600 m Pas.

**Patentansprüche**

1. Wasser in Öl (W/O) Emulsion, die eine mit Wasser nicht mischbare Flüssigkeit, wasserlösliche Monomere und/oder Polymere, Wasser und eine Emulgatorkombination enthält, dadurch gekennzeichnet, daß die Emulgatorkombination mindestens eine Alkylpolyglycoläthercarbonsäure oder Alkylphenolpolyglycoläthercarbonsäure vom HLB-Wert kleiner als 7 aufweist.

2. W/O-Emulsion nach Anspruch 1, dadurch gekennzeichnet, daß die gesamte Emulgatorkombination gerechnet auf die Säureform bei den Emulgatoren zwischen 5 und 25 Gewichtsprozent, bevorzugt bei 10% der Hydrophoben, nicht mit Wasser mischbaren Phase der W/O Emulsion liegt.

3. W/O-Emulsion nach Anspruch 1 oder 2, dadurch gekennzeichnet, daß der/die Äthercarbonsäureemulgator(en) in der Säureform oder als Salz verwendet werden.

4. W/O-Emulsion nach einem der Ansprüche 1 bis 3, dadurch gekennzeichnet, daß die wässrige, zu emulgierende Phase einen pH-Wert <4>2 bevorzugt 3 bis 3,5 aufweist.

**Revendications**

1. Emulsion eau dans l'huile (E/H), qui contient un liquide non miscible à l'eau, un monomère et/ou un polymère soluble dans l'eau, de l'eau et une combinaison d'émulsifiants, caractérisée en ce que la combinaison d'émulsifiants comprend au moins un acide carboxylique d'un éther polyglycolique d'un alcanol ou un acide carboxylique d'un éther polyglycolique d'un alkylphénol ayant une valeur HLB inférieure à 7.

2. Emulsion E/H selon la revendication 1, caractérisée en ce que la combinaison totale d'émulsifiants calculée sur la forme acide des émulsifiants est entre 5 et 25% en poids, de préférence 10%, de la phase hydrophobe non miscible à l'eau de l'émulsion E/H.

3. Emulsion E/H selon la revendication 1 ou 2, caractérisée en ce que le ou les acides carboxyliques de l'éther en tant qu'émulsifiant(s) sont utilisés sous forme d'acides ou de sels.

4. Emulsion E/H selon l'une des revendications 1 à 3, caractérisée en ce que la phase aqueuse à émulsifier présente une valeur de pH <4>2, de préférence de 3 à 3,5.

**Claims**

1. Water-in-oil (W/O) emulsion that contains a liquid non-miscible with water, hydrosoluble monomers and/or polymers, water and an emulsifier combination, characterized in that the emulsifier combination comprises at least one alkylpolyglykolether-carboxylic acid or alkylphenolpolyglykolether-carboxylic acid of HLB-value smaller than 7.

w. W/O-emulsion according to claim 1, characterized in that the whole emulsifier combination lies between 5 and 25% by weight, preferably at 10% of the hydrophobic phase non-miscible with water of the W/O-emulsion, calculated on the acid form for the emulsifiers.

3. W/O-emulsion according to claim 1 or 2, characterized in that the ether-carboxylic acid emulsifier(s) are employed in the acid form or as salt.

4. W/O-emulsion according to one of claims 1 to 3, characterized in that the aqueous phase to be emulsified displays a pH-value <4>2, preferably 3 to 3.5.